## Europäisches Patentamt
## European Patent Office
## Office européen des brevets

(19)

(11) Numéro de publication : **0 008 253**
**B1**

(12)

# FASCICULE DE BREVET EUROPÉEN

(45) Date de publication du fascicule du brevet :
08.07.81

(51) Int. Cl.³ : **G 21 C 19/10, B 25 J 15/04, B 66 C 1/56**

(21) Numéro de dépôt : 79400490.3

(22) Date de dépôt : 11.07.79

(54) Grappin automatique.

(30) Priorité : 28.07.78 FR 7822381

(43) Date de publication de la demande :
20.02.80 (Bulletin 80/04)

(45) Mention de la délivrance du brevet :
08.07.81 Bulletin 81/27

(84) Etats contractants désignés :
**BE DE GB IT NL**

(56) Documents cités :
FR - A - 1 244 439
FR - A - 1 334 480
FR - A - 1 437 541
FR - A - 2 045 598
FR - E - 92 909
LU - A - 43 727

(73) Titulaire : **NOVATOME**
**20 Avenue Edouard Herriot**
**F-92350 Le Plessis Robinson (FR)**

(72) Inventeur : **Blaive, Daniel**
**12 Route de Belleville**
**F-91190 Glf-sur-Yvette (FR)**
Inventeur : **Lafosse, Claude**
**91 Avenue Edouard Herriot**
**F-92350 Le Plessis Robinson (FR)**

(74) Mandataire : **Saint-Martin, René et al**
**CREUSOT-LOIRE 15 rue Pasquier**
**F-75383 Paris Cedex 08 (FR)**

Imprimerie Jouve, 17, rue du Louvre, 75001 Paris, France

« Grappin automatique »

La présente invention concerne un grappin automatique pour la manutention d'objets difficilement accessibles. Elle s'applique plus particulièrement, à titre d'exemple, dans le domaine des centrales nucléaires, à la manutention des assemblages combustibles ou d'accessoires divers dans le cœur du réacteur d'une telle centrale.

On connaît déjà, en particulier par le brevet français 1.482.974 et son addition 92.909, un grappin mécanique automatique qui permet de telles manutentions. Le grappin automatique ainsi décrit comporte un corps cylindrique creux dans lequel peut se déplacer un coulisseau. Le coulisseau est fixé au câble de suspension, si bien que lorsque le corps est libre le coulisseau suspendu au câble est en butée en position haute par rapport au corps, celui-ci reposant alors sur un épaulement du coulisseau. Si, au contraire, le corps est en appui, par exemple sur l'objet à saisir, le coulisseau vient par gravité en butée en position basse sur le corps, et c'est alors le coulisseau qui repose sur le corps. Le mouvement relatif du coulisseau dans le corps, lorsque l'on soulève ou que l'on fait reposer l'ensemble, est utilisé pour manœuvrer les doigts de préhension, articulés sur le corps du grappin, et qui peuvent prendre ainsi une position d'expansion ou une position rétractée, en s'accrochant sur l'objet à saisir ou en le libérant.

Un tel grappin comporte également un système de verrouillage intermédiaire constitué par une pièce couramment appelée « diabolo » articulée sur le coulisseau, et dont l'orientation est modifiée lorsque, en position basse du coulisseau, elle vient en butée sur un doigt fixe solidaire du corps. Selon sa position antérieure dans le cycle, le verrou prend alors, ou bien une position escamotée autorisant la remontée complète du coulisseau en position haute extrême, ou bien une position de verrouillage où il arrête la remontée du coulisseau en une position intermédiaire. La position intermédiaire correspond à la position rétractée des doigts, c'est-à-dire de libération de l'objet ; la position extrême haute du coulisseau correspond à la position expansée des doigts, c'est-à-dire à l'accrochage de l'objet. On peut ainsi, par simple manœuvre au treuil du câble de suspension, saisir l'objet ou le relâcher.

Le brevet déjà cité décrit des doigts de préhension munis de becs conjugués avec une rainure dans l'objet à saisir ; mais le mécanisme décrit pour la manœuvre des doigts à partir du mouvement du coulisseau conduit à des frottements relativement importants et à des risques d'arc-boutement, et la réalisation n'en est pas simple.

En outre il arrive fréquemment, dans le cas de réacteurs au sodium en particulier, que des particules solides restent dans la gorge des assemblages ; la prise par le grappin est alors mal assurée, ce qui peut être dangereux pour la suite de la manutention. Dans les dispositions décrites par le brevet français 1.482.974 rien n'empêche de soulever l'assemblage même si le grappin est imparfaitement engagé dans les rainures de l'assemblage, si bien qu'on peut être amené à soulever un ensemble mal accroché, avec les risques d'un décrochage intempestif en cours de manutention.

La présente invention, qui constitue un perfectionnement au brevet français 1.482.974 et à son addition 92.909, permet à la fois une réalisation industrielle plus aisée du mécanisme de manœuvre des doigts de préhension, et une sécurité de fonctionnement qui empêche par exemple l'accrochage des doigts si l'un ou plusieurs de ceux-ci ne peuvent pas s'engager totalement dans la rainure conjuguée des assemblages à saisir.

L'invention s'applique donc à un grappin automatique, lié à un câble unique de suspension et de manœuvre et comportant :
— un corps cylindrique creux,
— un coulisseau relié au câble de suspension et pouvant se déplacer par rapport au corps creux entre une position extrême haute où le corps creux est libre et supporté par le coulisseau, et une position extrême basse où le corps est en appui sur un objet et supporte le coulisseau,
— des organes de préhension, solidaires du corps en déplacement axial et susceptibles d'être déplacés radialement entre une position de prise où ils engagent des éléments conjugués de préhension de l'objet, et une position relâchée où ils libèrent l'objet,
— des moyens pour transformer le mouvement relatif du coulisseau dans le corps en un mouvement de déplacement radial des organes de préhension,
— un verrou à orientation variable , articulé sur le coulisseau, et dont l'orientation est modifiée, en position basse du coulisseau, par un doigt fixe solidaire du corps, l'orientation donnée amenant le verrou, selon son orientation antérieure, soit à une position éclipsée autorisant la remontée complète du coulisseau jusqu'à sa position haute extrême, soit à une position de verrouillage limitant la remontée du coulisseau à une position intermédiaire.

Selon l'invention, la zone du coulisseau se déplaçant devant les organes de préhension comporte des parties de différents diamètres sur lesquels prennent appui des éléments conjugués de manœuvre de chacun des organes de préhension, et déterminés de telle sorte que les organes de préhension sont en position de prise lorsque le coulisseau est en position haute extrême, et en position relâchée lorsque le coulisseau est en position intermédiaire.

Selon une forme préférentielle de l'invention, les positions relatives axiales des diverses zones de différents diamètres du coulisseau sont déterminées de telle sorte que, à partir de la position intermédiaire verrouillée où les organes de préhension sont en position relâchée, la course relative du coulisseau vers le bas du corps nécessaire à la mise en position de prise soit inférieure à la course nécessaire pour permettre un changement d'orientation du verrou.

Également selon une forme préférentielle de l'invention, les positions relatives axiales des diverses zones de différents diamètres du coulisseau sont déterminées de telle sorte que, à partir de la position extrême haute du coulisseau où le verrou est en position escamotée et les organes de préhension en position de prise, la course relative du coulisseau vers le bas du corps nécessaire pour la mise en position relâchée soit inférieure à la course nécessaire pour permettre un changement d'orientation du verrou.

L'invention sera mieux comprise en se référant à un mode de réalisation particulier donné à titre d'exemple et représenté par les dessins annexés.

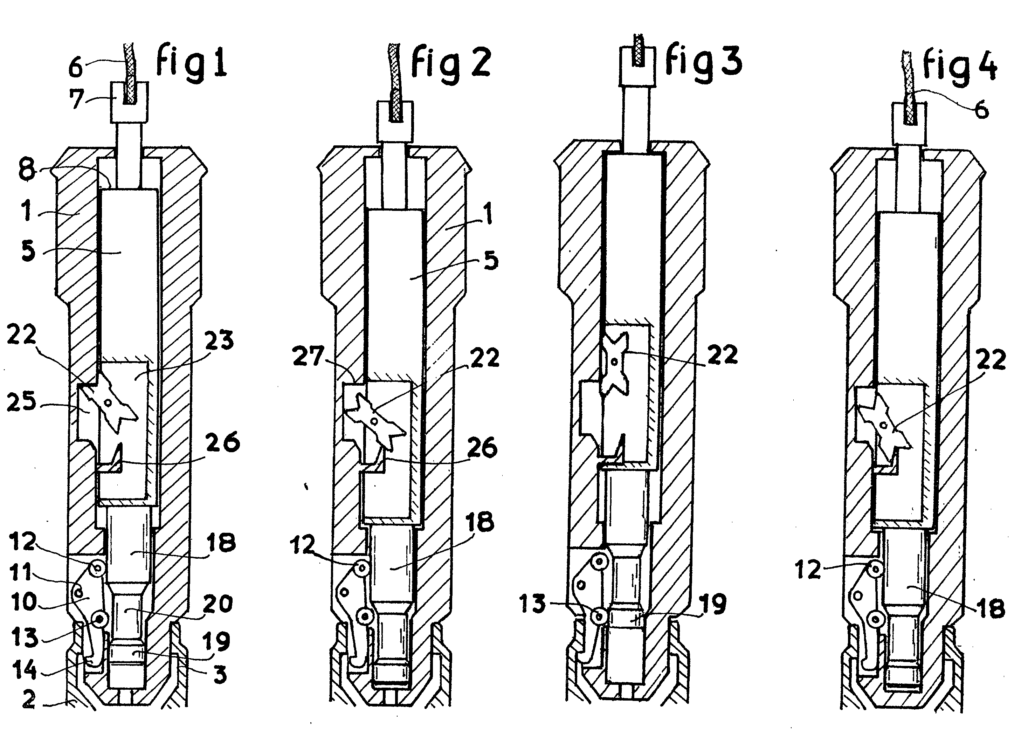

Les figures 1 à 4 illustrent, par quatre phases caractéristiques, le fonctionnement d'un grappin muni d'un dispositif de commande des doigts selon l'invention. La figure 1 représente le grappin libre lorsqu'il est amené juste au contact de l'objet à saisir. La figure 2 représente le grappin dans la position de détente maximum du câble de suspension. La figure 3 représente le grappin en position de soulèvement de l'objet. La figure 4 représente le grappin en position de décrochage.

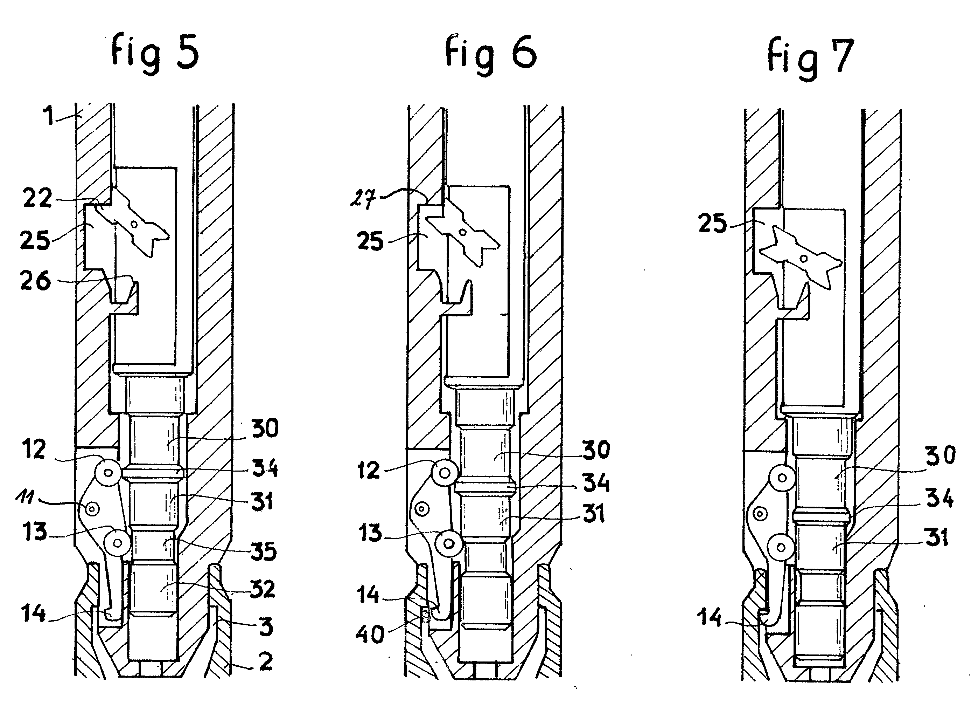

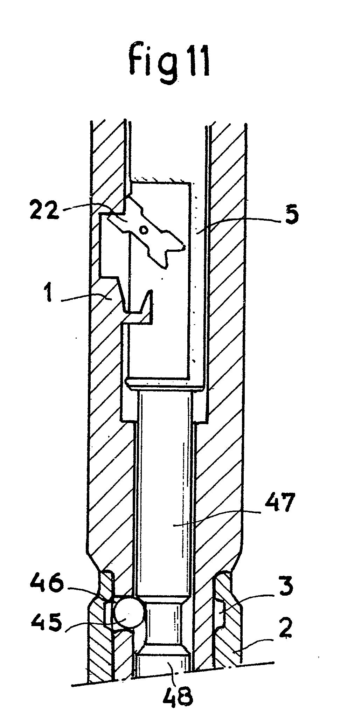

Les figures 5 à 10 représentent, en vue partielle à plus grande échelle, une variante de réalisation permettant d'éviter les accrochages incertains. Les figures 5, 7, 8 et 10 représentent des phases respectivement homologues à celles des figures 1, 2, 3 et 4. La figure 6 représente un état intermédiaire dans la phase d'accrochage ; la figure 9 représente un état intermédiaire dans la phase de décrochage.

La figure 11 représente une variante de réalisation à billes.

En se référant tout d'abord à l'ensemble des figures 1 à 4, on verra que le grappin comporte un corps cylindrique creux 1 dont la partie inférieure a une forme venant s'adapter à la partie supérieure de l'objet à manipuler, et par exemple ici la partie supérieure d'un assemblage combustible 2 pour un réacteur nucléaire. L'assemblage 2 comporte une gorge intérieure de préhension 3. Le grappin comporte un coulisseau axial 5, et le câble 6 de suspension et de manœuvre de l'ensemble est fixée à une chape 7 solidaire de la tige du coulisseau, extérieurement au corps du grappin. La course du coulisseau dans le corps du grappin est limitée d'une part par l'épaulement 8 du coulisseau et qui peut venir en butée à la partie haute intérieure du corps, et d'autre part par la chape 7 qui peut venir en butée sur le corps du grappin.

Le grappin comporte des doigts de préhension 10 également répartis autour du grappin et dont on n'a représenté qu'un seul exemplaire sur la figure, dans un souci de simplicité du dessin. Chaque doigt 10 est articulé en 11 sur le corps 1, et comporte deux galets fous 12 et 13. L'extrémité du levier constituant le doigt comporte un bec 14 de forme conjuguée avec celle de la gorge 3 de l'assemblage à saisir.

La partie inférieure du coulisseau comporte deux parties cylindriques 18 et 19 séparées par une autre partie cylindrique de plus faible diamètre 20. Des parties coniques de raccordement relient les différentes parties cylindriques.

Le verrou orientable 22, ou « diabolo », est articulé sur le coulisseau à l'intérieur d'une chambre 23. Les extrémités du verrou 22 forment chacune un dièdre droit. D'autre part le corps 1 du grappin comporte une chambre latérale 25 située sensiblement en face de la chambre 23 du coulisseau ; sous la chambre 25 un doigt fixe 26 fait saillie vers l'intérieur en pénétrant dans la chambre 23 du coulisseau.

Le fonctionnement du dispositif est analogue dans ses grandes lignes à ce qui a été décrit à propos du brevet français 1.482.974 et va maintenant être rappelé brièvement. A la figure 1 la disposition relative des différents organes du grappin est celle qui correspond à la manutention du grappin à vide. Dans ce cas le verrou 22 est sensiblement à 45°, si bien que sous l'effet de la gravité le corps 1 vient reposer sur le dièdre d'extrémité du verrou par l'épaulement 27 formant la face supérieure de la chambre 25. Dans cette position le galet 12 est repoussé vers l'extérieur par la surface cylindrique 18 tandis que le galet 13 est situé en face de la zone 20 à diamètre réduit, si bien que les crochets 14 des doigts sont rétractés vers l'intérieur, sans faire saillie au-delà du corps 1.

C'est dans cet état que l'on descend l'ensemble du grappin sur l'assemblage 2 à saisir. A partir de la position représentée à la figure 1 où le grappin vient juste au contact de l'assemblage 2, on continue à laisser descendre le câble 6, et tandis que le corps 1 est bloqué dans sa descente par l'assemblage le coulisseau 2 continue à descendre à l'intérieur du corps jusqu'à une position extrême représentée à la figure 2. Dans cette nouvelle position le galet 12 est toujours en appui sur la surface 18 et les doigts de préhension sont toujours rétractés. Mais le verrou 22 est maintenant venu au contact avec la butée 26, qui l'a légèrement fait tourner dans le sens inverse des aiguilles d'une montre.

Dans ces conditions si l'on tire maintenant à nouveau sur le câble 6 on reviendra progressivement à la position du coulisseau dans le corps correspondant à celle de la figure 1, mais alors le verrou 22 va entrer en contact avec la surface 27 non plus par l'intérieur de son dièdre, mais par une portion de sa surface extérieure, ce qui entraînera une rotation du verrou d'un angle supérieur à 90° pour l'amener dans la position représentée à la figure 3. On voit que dans cette position de la figure 3 le verrou ne constitue pas un obstacle à la remontée complète du coulisseau, et il remontera jusqu'à arriver en butée à l'intérieur de la chambre du corps 1. Si l'on continue à tirer sur le câble c'est l'ensemble du grappin, coulisseau et corps, qui seront ensuite soulevés. Mais on voit que dans cette position représentée à la figure 3 le galet 12 a été libéré par la surface cylindrique 18 tandis qu'au contraire le galet 13 est à son tour repoussé vers l'extérieur par la surface 19, ce qui entraîne la rotation du doigt de préhension dont le crochet 14 vient faire saillie à l'extérieur et s'engager dans la gorge 3 de l'assemblage 2. En soulevant le coulisseau par le câble 6 on soulève donc à la fois le corps 1 et l'assemblage 2 qui lui est maintenant accroché.

Lorsque l'on veut poser l'assemblage et le décrocher du grappin, dès que l'ensemble de l'assemblage et du corps 1 est en appui sur son support le coulisseau continue sa descente dans le corps jusqu'à la position extrême basse représentée à la figure 4. Durant cette descente on est revenu à la position de la figure 2 avec le galet 12 repoussé vers l'extérieur et le galet 13 libre de revenir vers l'axe du grappin, ce qui entraîne la contraction des doigts 14 et le décrochage entre le grappin et l'assemblage. Dans cette position le verrou 22 est à nouveau venu en butée sur le doigt fixe 26, mais compte tenu de l'orientation verticale qu'il avait auparavant c'est son dièdre inférieur qui vient en appui sur le doigt 26. Il en résulte une orientation du verrou telle que l'autre dièdre faire directement face à la butée 27 du corps. Quand on soulèvera l'ensemble le verrou 22 viendra s'encastrer sur la surface 27 empêchant la remontée complète du coulisseau dans le corps. Dans cette position les doigts 14 sont toujours rétractés si bien que si l'on continue à tirer sur le câble 6 on entraînera seulement le coulisseau et le corps 1 qui repose sur le verrou 22, mais l'assemblage 2 libéré restera en place.

On pourra noter la simplicité de la réalisation du mécanisme transformant le mouvement relatif du coulisseau 5 dans le corps 1 en un mouvement d'ouverture et de fermeture des doigts de préhension 10, ce qui assure en service une grande sûreté de fonctionnement des doigts.

On se référera maintenant aux figures 5 à 10 pour une variante de réalisation qui présente une sécurité accrue de fonctionnement dans le cas où des particules solides viendraient encombrer la gorge d'accrochage des assemblages ou viendraient gêner le libre débattement dans un sens comme dans l'autre des doigts de préhension. La variante de réalisation réside essentiellement dans la répartition des surfaces cylindriques constituant la partie basse du coulisseau. Tous les autres éléments comme les butées extrêmes du coulisseau 5 dans le corps 1, ou le fonctionnement du verrou intermédiaire 22 sont identiques à ce qui vient d'être décrit.

Ici la partie basse du coulisseau comporte trois zones 30, 31 et 32 de même diamètre. Les surfaces 30 et 31 sont séparées par une saillie de faible longueur 34 tandis que les zones 31 et 32 sont séparées par une zone en creux 35. Bien entendu toutes les zones de diamètres différents sont raccordées par des parties coniques. Au jeu de fonctionnement près les zones 34 et 35 ont pratiquement la même longueur et sont situées à une distance l'une de l'autre égale à l'entraxe des galets 12 et 13 de telle sorte que lorsque le galet 12 est engagé dans la saillie 34 le galet 13 trouve dans le creux 35 la place nécessaire pour effectuer un déplacement de même amplitude et de sens contraire, les galets 12 et 13 ayant leurs axes à la même distance de l'axe d'articulation 11 de l'ensemble du doigt.

La position d'expansion des doigts, c'est-à-dire d'engagement du crochet 14 dans la gorge 3 est obtenue lorsque les deux galets 12 et 13 sont en appui sur les surfaces de même diamètre 30, 31 ou 32. La position rétractée des doigts c'est-à-dire de dégagement des crochets de la gorge 3 est obtenue lorsque le galet 12 est engagé par la saillie 34 tandis que le galet 13 est en appui sur la zone 35 de diamètre réduit.

Si l'on part de la position représentée à la figure 5, homologue de la figure 1 décrite précédemment et qui correspond au moment où le grappin libre est descendu vers l'assemblage 2 et vient au premier contact avec celui-ci, on voit que comme sur la figure 1 les doigts sont en position rétractée pour permettre l'engagement de la partie basse du grappin dans la partie haute de l'assemblage. Mais ici, après immobilisation du corps du grappin, et lorsque le coulisseau 5 commence sa descente relative à l'intérieur du corps 1 on voit qu'il en résulte immédiatement un mouvement d'expansion des doigts, la surface 31 venant tout de suite engager le galet 13 tandis que le galet 12 tend à être libéré par la saillie 34. Si, comme représenté à la figure 6, des particules solides 40 étaient venues encombrer la gorge 3 de l'assemblage, gênant ainsi la pénétration normale du crochet 14, on voit que le coulisseau ne pourra pas continuer à descendre puisque le galet 13 ne pourra pas s'éclipser suffisamment pour laisser passer la surface 31. Le coulisseau ne pourra donc descendre que d'une très faible quantité correspondant surtout à des rattrapages de jeux, si bien que le verrou 22 ne descendra pas au-delà d'une position dans laquelle il n'a pas atteint le contact avec la butée 26 et même dans laquelle la surface 27 n'a pas quitté le dièdre d'extrémité du verrou. On voit que dans cette position lorsque l'on tirera à nouveau sur le câble pour remonter l'ensemble le verrou 22 restera dans sa position de verrouillage, bloqué par la surface 27 ; les doigts 10 resteront dans leur position rétractée, et le soulèvement du grappin n'entraînera pas le soulèvement de l'assemblage 2. Ceci constitue une sécurité fondamentale car il est considéré comme prioritaire de ne pas remonter l'assemblage plutôt que de le remonter avec un accrochage incertain qui pourrait entraîner un décrochage intempestif au cours des manutentions ultérieures, avec tous les risques que cela entraînerait.

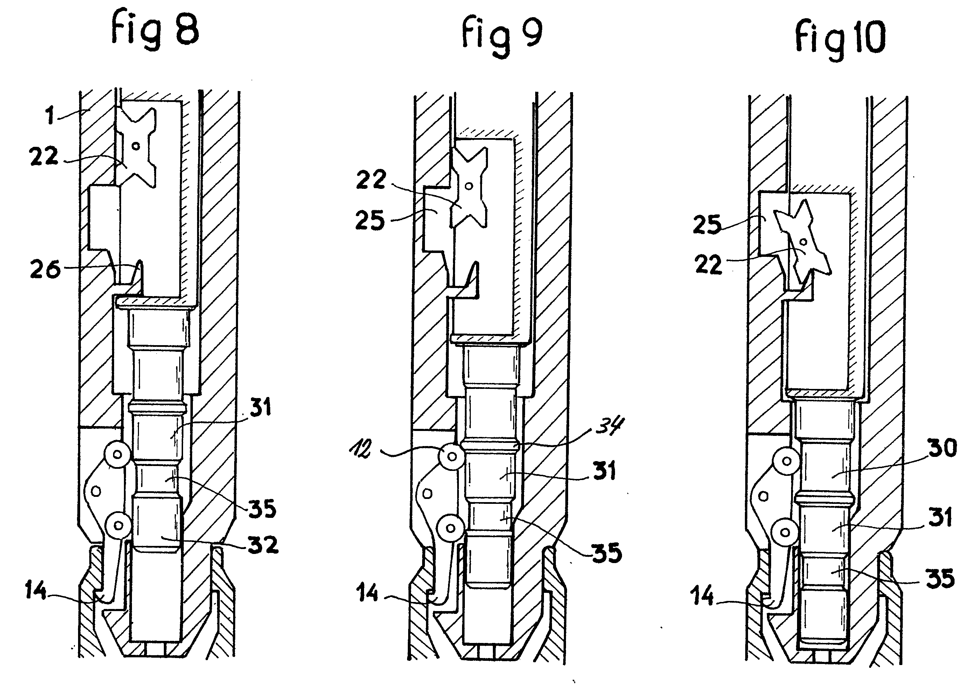

Si au contraire rien ne s'oppose à l'introduction correcte des doigts 14 dans la gorge 3 on atteindra (figure 7) la position basse extrême du coulisseau avec rotation partielle du verrou 22 par butée sur le doigt 26, autorisant ensuite la remontée complète du coulisseau jusqu'à la position représentée à la figure 8 qui est celle du soulèvement complet de l'ensemble avec les doigts de préhension totalement engagés dans la gorge de l'assemblage.

On voit que le dispositif ainsi réalisé permet sans manœuvre supplémentaire du câble de faire un essai d'accrochage des doigts dans la gorge de préhension avant libération et pivotement du verrou 22, conduisant ainsi à un relèvement à vide du grappin lorsque celui-ci n'a pas pu assurer de façon absolument sûre son accrochage sur l'assemblage.

Cette amélioration est aussi valable pour la phase inverse de dépose d'un assemblage au cas où les doigts resteraient partiellement engagés dans la gorge par suite de présence de particules. On se référera pour cela à la figure 9 qui montre la première phase de la descente du coulisseau dans le corps après que l'ensemble assemblage-corps ait pris son assise. Ici encore la saillie 34 viendra engager le galet 12, pour commander l'ouverture des doigts avant que le verrou 22 ne soit venu en contact avec le doigt 26 qui commandera son changement d'orientation, et même avant que sa partie supérieure puisse basculer dans la chambre 25. Si donc l'ouverture des doigts ne pouvait pas se faire, en raison par exemple d'un collage dans la gorge empêchant leur mouvement, le coulisseau 5 ne pourra pas descendre plus bas que dans la position représentée à la figure 9, et le verrou 28 restera en position verticale. Lorsque l'on tirera à nouveau sur le câble de suspension le coulisseau pourra toujours remonter en position de butée extrême haute avec les doigts restés en position de préhension ; la remontée entraînera non seulement la remontée du grappin mais la remontée de l'assemblage défectueux qui pourra être nettoyé avant une nouvelle manutention.

Si, au contraire, rien ne s'oppose au fonctionnement normal d'ouverture du doigt par déplacement des galets 12 et 13 sous l'action de la saillie 34 et de la gorge 35, le coulisseau pourra descendre en position basse extrême comme représenté à la figure 10, homologue de la figure 4 de l'exemple précédent, ce qui entraînera une rotation du verrou 22 dans la position de la figure 10 ; à une nouvelle traction du câble correspondra une remontée partielle du coulisseau 5 qui viendra en butée en position intermédiaire lorsque le verrou 22 aura repris la position représentée à la figure 5. Dans cette position les doigts seront en position rétractée et la phase suivante sera une remontée de l'ensemble du grappin, complètement dégagé de l'assemblage 2 qui restera alors en place.

Bien entendu l'invention n'est pas strictement limitée au mode de réalisation qui a été décrit à titre d'exemple, mais elle couvre également les réalisations qui n'en différeraient que par des détails, par des variantes de réalisation ou par l'utilisation de moyens équivalents.

Ainsi les doigts articulés pourraient encore être remplacés par de simples billes, de diamètre supérieur à l'épaisseur des parois du corps et à demi prisonnières dans des lumières traversant le corps. La figure 11 représente une telle variante, dans une position correspondant à la figure 5 de l'exemple précédent, c'est-à-dire au moment où le corps 1 du grappin libre vient juste au contact sur l'assemblage 2 à saisir. On voit ici, comme sur la figure 5, que la descente complète du coulisseau 5 ne peut se faire que si la gorge 3 n'est pas encombrée et permet à la bille 45 de venir s'y loger partiellement en se déplaçant radialement dans la lumière 46 sous la poussée de la surface cylindrique 47 du coulisseau. Si ce déplacement est gêné, la bille ne permettra pas une descente du coulisseau suffisante pour libérer le verrou 22, et à la remontée le coulisseau restera en butée en position intermédiaire et les billes constituant ici les organes de préhension resteront en position rétractée. Si au contraire le déplacement radial des billes n'est pas gêné, le coulisseau pourra descendre à fond, le verrou 22 basculera en une position qui autorisera ensuite la remontée complète du coulisseau. Dans cette dernière position de soulèvement et d'accrochage, la bille 45 maintenue par la surface 48 pour partie dans la gorge 3 et pour partie dans la lumière 46 assurera l'accrochage du grappin sur l'assemblage.

Le dessin de la figure 11 étant volontairement simplifié, on n'y a pas représenté l'organe de retenue partielle des billes 45 qui permet leur déplacement radial de verrouillage mais les empêche de quitter le corps 1 lorsque le grappin est soulevé seul.

Cette variante de réalisation plus simple permet bien de vérifier la possibilité d'un bon accrochage avant soulèvement. Il suffit, comme dans l'exemple précédent, que les positions relatives axiales des diverses zones de différents diamètres du coulisseau soient déterminées de telle sorte que, à partir de la position intermédiaire, la course du coulisseau vers le bas nécessaire pour engager à fond les billes dans la gorge soit inférieure à la course nécessaire pour permettre un changement d'orientation du verrou.

Par contre cette variante ne permet pas, à la manœuvre inverse de décrochage, de vérifier que les billes se dégagent librement de la gorge.

## Revendications

1. Grappin automatique, pour saisir ou libérer un objet au moyen d'un câble unique de suspension (6) et de manœuvre, et comportant :
— un corps cylindrique creux (1),
— un coulisseau (5) relié au câble de suspension (6) et pouvant se déplacer par rapport au corps creux (1) entre une position extrême haute où le corps creux est libre et supporté par le coulisseau, et une position extrême basse où le corps est en appui sur un objet et supporte le coulisseau
— des organes de préhension (10, 14, 43), solidaires du corps en déplacement axial et susceptibles d'être déplacés radialement entre une position de prise où ils engagent des éléments conjugués de préhension (3) de l'objet, et une position relâchée où ils libèrent l'objet,
— des moyens pour transformer le mouvement relatif du coulisseau dans le corps en un mouvement de déplacement radial des organes de préhension

— un verrou à orientation variable (22), articulé sur le coulisseau, et dont l'orientation est modifiée, en position basse du coulisseau par un doigt fixe (26) solidaire du corps, l'orientation donnée amenant le verrou selon son orientation antérieure, soit à une position éclipsée autorisant la remontée complète du coulisseau (5) jusqu'à sa position haute extrême, soit à une position de verrouillage limitant la remontée du coulisseau à une position intermédiaire,

grappin dans lequel la zone du coulisseau (5) se déplaçant devant les organes de préhension (10, 14, 43) comporte des parties (18-20, 30-32) de différents diamètres sur lesquels prennent appui des éléments conjugués de manœuvre de chacun des organes de préhension, et déterminés de telle sorte que les organes de préhension sont en position de prise lorsque le coulisseau est en position haute extrême, et en position relâchée lorsque le coulisseau est en position intermédiaire,

caractérisé par le fait que les positions relatives axiales des diverses parties (18-20, 30-32) de différents diamètres du coulisseau (5) sont déterminées de telle sorte que, à partir de la position intermédiaire verrouillée où les organes de préhension (10, 14, 43) sont en position relâchée, la course relative du coulisseau (5) vers le bas du corps (1) nécessaire à la mise en position de prise soit inférieure à la course nécessaire pour permettre un changement d'orientation du verrou (22).

2. Grappin automatique, pour saisir ou libérer un objet au moyen d'un câble unique (6) de suspension et de manœuvre, et comportant :

— un corps creux cylindrique (1),

— un coulisseau (5) relié au câble de suspension (6) et pouvant se déplacer par rapport au corps creux (1) entre une position extrême haute où le corps creux est libre et supporté par le coulisseau, et une position extrême basse où le corps est en appui sur un objet et supporte le coulisseau,

— des organes de préhension (10, 14, 43), solidaires du corps en déplacement axial et susceptibles d'être déplacés radialement entre une position de prise où ils engagent des éléments conjugués de préhension (3) de l'objet, et une position relâchée où ils libèrent l'objet,

— des moyens pour transformer le mouvement relatif du coulisseau dans le corps en un mouvement de déplacement radial des organes de préhension,

— un verrou à orientation variable (22), articulé sur le coulisseau, et dont l'orientation est modifiée, en position basse du coulisseau, par un doigt fixe (26) solidaire du corps, l'orientation donnée amenant le verrou, selon son orientation antérieure, soit à une position éclipsée autorisant la remontée complète du coulisseau jusqu'à sa position haute extrême, soit à une position de verrouillage limitant la remontée du coulisseau (5) à une position intermédiaire,

grappin dans lequel la zone du coulisseau (5) se déplaçant devant les organes de préhension (10, 14, 43) comporte des parties (18-20, 30-32) de différents diamètres sur lesquels prennent appui des éléments conjugués de manœuvre de chacun des organes de préhension, et déterminés de telle sorte que les organes de préhension sont en position de prise lorsque le coulisseau est en position haute extrême, et en position relâchée lorsque le coulisseau est en position intermédiaire,

caractérisé par le fait que les positions relatives axiales des diverses parties (18-20, 30-32) de différents diamètres du coulisseau (5) sont déterminées de telle sorte que, à partir de la position extrême haute du coulisseau (5) où le verrou (22) est en position escamotée et les organes de préhension (10, 14, 43) en position de prise, la course relative du coulisseau (5) vers le bas du corps (1) nécessaire pour la mise en position relâchée soit inférieure à la course nécessaire pour permettre un changement d'orientation du verrou (22).

**Claims**

1. Automatic grab, for taking up or releasing an object by means of a single suspending and operating cable (6), and comprising :

— a hollow cylindrical body (1),

— a slide (5) connected to the suspension cable (6) and capable of moving with respect to the hollow body (1) between a high extreme position in which the hollow body is free and supported by the slide, and a low extreme position in which the body bears on an object and supports the slide,

— gripping members (10, 14, 43) solid with the body in axial movement and capable of being moved radially between a gripping position in which they engage with interacting gripping elements (3) of the object, and a relaxed position in which they release the object,

— means for transforming the relative movement of the slide in the body into a radial displacement movement of the gripping members,

— a bolt (22) with variable orientation, articulated on the slide, and whose orientation is altered, with the slide in the low position, by a fixed finger (26) solid with the body, the given orientation bringing the bolt, depending on its previous orientation, either into a retracted position allowing the slide (5) to return completely to its high extreme position, or to a locking position limiting the return of the slide to an intermediate position,

wherein the region of the slide (5) moving in front of the gripping members (10, 14, 43) has parts (18-20, 30-32), of different diameters on which interacting operating elements of each of the gripping members bear, and so defined that the gripping members are in the gripping position when the slide is in the high extreme position, and in the relaxed position when the slide is in the intermediate position,

characterised by the fact that the relative axial positions of the various parts (18-20, 30-32) of different diameters of the slide (5) are so defined that, from the intermediate locked position in which the gripping members (10, 14, 43) are in the relaxed position, the relative travel of the slide (5) towards the bottom of the body (1) necessary for setting them in the gripping position is less than the travel necessary for allowing a change in orientation of the bolt (22).

2. Automatic grab, for taking up or releasing an object by means of a single suspending and operating cable (16), and comprising :
— a cylindrical hollow body (1),
— a slide (5) connected to the suspension cable (16) and capable of moving with respect to the hollow body (1) between a high extreme position in which the hollow body is free and supported by the slide, and a low extreme position in which the body bears on an object and supports the slide,
— gripping members (10, 14, 43) solid with the body in axial movement and capable of being moved radially between a gripping position in which they engage with interacting gripping elements (3) of the object, and a relaxed position in which they release the object,
— means for transforming the relative movement of the slide in the body into a radial displacement movement of the gripping members,
— a bolt (22) with variable orientation articulated on the slide, and whose orientation is altered, with the slide in the low position, by a fixed finger (26) solid with the body, the given orientation bringing the bolt, depending on its previous orientation, either into a retracted position allowing the slide to return completely to its high extreme position, or to a locking position limiting the return of the slide (5) to an intermediate position,
wherein the region of the slide (5) moving in front of the gripping members (10, 14, 43) comprises parts (18-20, 30-32) of different diameters on which interacting operating elements of each of the gripping members bear, and so defined that the gripping members are in the gripping position when the slide is in the high extreme position, and in the relaxed position when the slide is in the intermediate position,
characterised by the fact that the relative axial positions of the various parts (18-20, 30-32) of different diameters of the slide (5) are so defined that, from the high extreme position of the slide (5) in which the bolt (22) is in the retracted position and the gripping members (10, 14, 43) in the gripping position, the relative travel of the slide (5) towards the bottom of the body (1) necessary for setting them in the relaxed position is less than the travel necessary for allowing a change in orientation of the bolt (22).

**Ansprüche**

1. Automatikgreifgerät zur Aufnahme bzw. Freigabe eines Gegenstands mittels eines einzigen Halte- und Betätigungsseils (6) bestehend aus :
— einem zylindrischen Hohlkörper (1)
— einem mit dem Halteseil (6) verbundenen Schieber (5), der sich zum Hohlkörper (1) zwischen einer Hochendstellung, in der der Hohlkörper frei ist und wom Schieber getragen wird, und einer Tiefendstellung, in der der Hohlkörper auf einem Gegenstand aufliegt und den Schieber trägt, bewegen kann,
— mit dem sich axial bewegenden Hohlkörper formschlüssig verbundenen Greiforganen (10, 14, 43), die radial zwischen einer Greifstellung, in der sie verbundene Elemente (3) zur Aufnahme des Gegenstands eingreifen lassen, und einer Loslass-Stellung bewegt werden können, in der sie den Gegenstand freigeben,
— Mitteln zur Umwandlung der relativen Schieberbewegung im Körper in eine Radialbewegung der Greiforgane,
— einem am Schieber angelenkten Riegel (22) mit verstellbarer Ausrichtung, die in Schiebertiefstellung durch einen festen mit dem Hohlkörper formschlüssig verbundenen Daumen (26) geändert wird, wobei die gegebene Ausrichtung den Riegel je nach seiner vorhergehenden Ausrichtung entweder in eine eingezogene Stellung bringt, in der der Schieber (5) voll bis in seine Hochendstellung hochfahren kann, oder in eine Riegelstellung, in der das Hochfahren des Schiebers bis in eine Zwischenstellung begrenzt wird,
Greifgerät, bei dem der Bereich des Schiebers (5), der sich vor den Greiforganen (10, 14, 43) bewegt, Teile (18-20, 30-32) unterschiedlichen Durchmessers aufweist, auf denen die verbundenen Betätigungselemente eines jeden Greiforgans ruhen und die so ausgelegt sind, dass sich die Greiforgane in Greifstellung befinden, wenn der Schieber in Hochendstellung ist, und in Loslass-Stellung, wenn der Schieber sich in Zwischenstellung befindet,
dadurch gekennzeichnet, dass die relativen Axialstellungen der verschiedenen Teile (18-20, 30-32) unterschiedlichen Durchmessers des Schiebers (5) so bestimmt sind, dass ausgehend von der verriegelten Zwischenstellung, in der die Greiforgane (10, 14, 43) sich in Loslass-Stellung befinden, der relative Weg des Schiebers (5) zum unteren Teil des Körpers (1), den der Schieber zur Erzielung der Greifstellung zurücklegen muss, kleiner ist als der zur Änderung der Ausrichtung des Riegels (22) erforderliche Weg.

2. Automatikgreifgerät zur Aufnahme bzw. Freibage eines Gegenstands mittels eines einzigen Halte- und Betätigungsseils (6) bestehend aus :
— einem zylindrischen Hohlkörper (1)
— einem mit dem Halteseil (6) verbundenen Schieber (5), der sich zum Hohlkörper (1) zwischen einer Hochendstellung, in der der Hohlkörper frei ist und vom Schieber getragen wird, und einer Tiefendstellung, in der der Hohlkörper auf einem Gegenstand aufliegt und den Schieber trägt, bewegen kann,
— mit dem sich axial bewegen Hohlkörper formschlüssig verbundenen Greiforganen (10, 14, 43), die radial zwischen einer Greifstellung, in der sie verbundene Elemente (3) zur Aufnahme des Gegenstands eingreifen lassen, und einer Loslass-Stellung bewegt werden können, in der sie den Gegenstand freigeben,

— Mitteln zur Umwandlung der relativen Schieberbewegung im Körper in eine Radialbewegung der Greiforgane,

— einem am Schieber angelenkten Riegel (22) mit verstellbarer Ausrichtung, die in Schiebertiefstellung durch einen festen mit dem Hohlkörper formschlüssig verbundenen Daumen (26) geändert wird, wobei die gegebene Ausrichtung den Riegel je nach seiner vorhergehenden Ausrichtung entweder in eine eingezogene Stellung bringt, in der der Schieber (5) voll bis in seine Hochendstellung hochfahren kann, oder in eine Riegelstellung, in der das Hochfahren des Schiebers (5) bis in eine Zwischenstellung begrenzt wird, Greifgerät, bei dem der Bereich des Schiebers (5), der sich vor der Greiforganen (10, 14, 43) bewegt, Teile (18-20, 30-32) unterschiedlichen Durchmessers aufweist, auf denen die verbundenen Betätigungselemente eines jeden Greiforgans ruhen und die so ausgelegt sind, dass sich die Greiforgane in Greifstellung befinden, wenn der Schieber in Hochendstellung ist, und in Loslass-Stellung, wenn der Schieber sich in Zwischenstellung befindet,

dadurch gekennzeichnet, dass die relativen Axialstellungen der verschiedenen Teile (18-20, 30-32) unterschiedlichen Durchmessers des Schiebers (5) so bestimmt sind, dass ausgehend von der Hochendstellung des Schiebers (5), in der der Riegel (22) eingezogen ist und die Greiforgane (10, 14, 43) sich in Greifstellung befinden, der relative Weg des Schiebers (5) zum unteren Teil des Körpers (1), den der Schieber zur Erzielung der Loslass-Stellung zurücklegen muss, kleiner ist als der zur Änderung der Ausrichtung des Riegels (22) erforderliche Weg.

fig 1

fig 2

fig 3

fig 4

fig 7

fig 6

fig 5

# fig 8

# fig 9

# fig 10

0 008 253

fig 11